Europäisches Patentamt

European Patent Office

Office européen des brevets

(19)

(11) Publication number: **0 414 989 A1**

# EUROPEAN PATENT APPLICATION

(12)

(21) Application number: **90102690.6**

(22) Date of filing: **12.02.90**

(51) Int. Cl.⁵: **B63B 35/79, B63B 35/81**

(30) Priority: **14.10.89 JP 119839/89 U**
**29.08.89 JP 31481/89 U**
**29.08.89 JP 31482/89 U**

(43) Date of publication of application:
**06.03.91 Bulletin 91/10**

(84) Designated Contracting States:
**BE DK FR IT NL SE**

(71) Applicant: **Nakamura, Yukio**
**5-6, 1-Chome, Tengachayakita, Nishinari-Ku**
**Osaka-Shi, Osaka-Fu(JP)**

(72) Inventor: **Nakamura, Yukio**
**5-6, 1-Chome, Tengachayakita, Nishinari-Ku**
**Osaka-Shi, Osaka-Fu(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) Steering handle grip for jet-propelled type gliding boats.

(57) The present invention relates to a steering handle grip to be attached to the steering handle bar of a jet-propelled gliding boat, including a grip body made from an elastically deformable material such as synthetic resin or rubber and having a thickness and length such that it can be held by one hand, and a pair of operator's hand stopping flanges of large diameter bulging continuously and integrally from the longitudinal opposite ends of the grip body, the handle grip being characterized in that:
the grip body is egg-shaped in cross-section, having opposed front and rear arcuate surfaces positioned on the major axis, the front arcuate surface being contacted by the second through fifth fingers of the operator's hand, the rear arcuate surface being contacted by the palm,
an attaching port for attachment to the handle bar, the attaching port opening at an eccentric position deviated toward the rear arcuate surface along the major axis of the grip body,
wherein the thickness of the front region defined between the inner wall surface of the attaching port and the front arcuate surface is greater than the respective thicknesses of the remaining regions, and wherein the thickened front region is formed with a plurality of dot-like through-holes substantially orthogonal to the major axis of the grip body.
Thus, when the operator steers the jet-propelled

gliding boat, his hands intimately fit the steering handle grips, whereby the handle grips can be held stably and firmly in hands and even subtle movements of the fingers can be effectively transmitted to the handle grips to orient the boat as desired.

EP 0 414 989 A1

## STEERING HANDLE GRIP FOR JET-PROPELLED TYPE GLIDING BOATS

### BACKGROUND OF THE INVENTION

Generally, in jet-propelled gliding boats adapted to glide freely over water surface, as disclosed, e.g., in my United States Patent Nos. 4,745,872 and 4,748,928, a single person rides the boat in a standing posture on the floor deck of the boat with his hands gripping the steering handle bar to turn it for steering so as to control a steering cable extending to the stern to swing the steering nozzle of a jet-propelling device (water jet pump) installed in the stern for steering the boat, the operator also using the fingers of one of his hands gripping the handle bar to turn the throttle operating lever for the boat-mounted engine so as to control the gliding speed of the boat.

And in that case, the boat and the operator form a unitary body which is well-balanced, with the operator intentionally shifting the position of application (the position of center of gravity of the boat) of the tread pressure (operator's weight) so as to glide the boat on water surface in a straight line or a curve. Furthermore, bending and straightening his body, the operator controls the attitude and direction of travel of the boat so as to jump the boat above water surface or, reversely, somewhat plunge the bow into water.

A tiltable handle pole is pivotally mounted on the bow and a handle is attached to the rear upper end thereof overhanging the floor deck; therefore, if the operator standing on the floor deck pushes the handle bar forward with his hands, the front portion of the boat dips, and if he pulls it backward, the front portion of the boat comes out of water. If he turns the handle bar in a horizontal plane, the boat revolves, while if he twists the handle bar to tilt the latter, the boat changes its attitude to an inclined one.

Unlike an object associated with roads, which are immovable, such as a land-traveling motorcycle, the boat glides on water surface which incessantly sways, requiring the operator to have a high degree of steering technique in freely changing the attitude and direction of travel of the boat while keeping the boat well-balanced.

Therefore, such boats are very interesting to expert riders, who use them in bays and lakes; however, behind this merry phase lies the danger that even the smallest steering mistake on the rider's part can throw him out of the boat against water surface, even a mere thought of which danger strikes terror into beginner's heart. It is not too much to say that elimination of such feeling of uneasiness depends solely on the operator's hands gripping the handle bar.

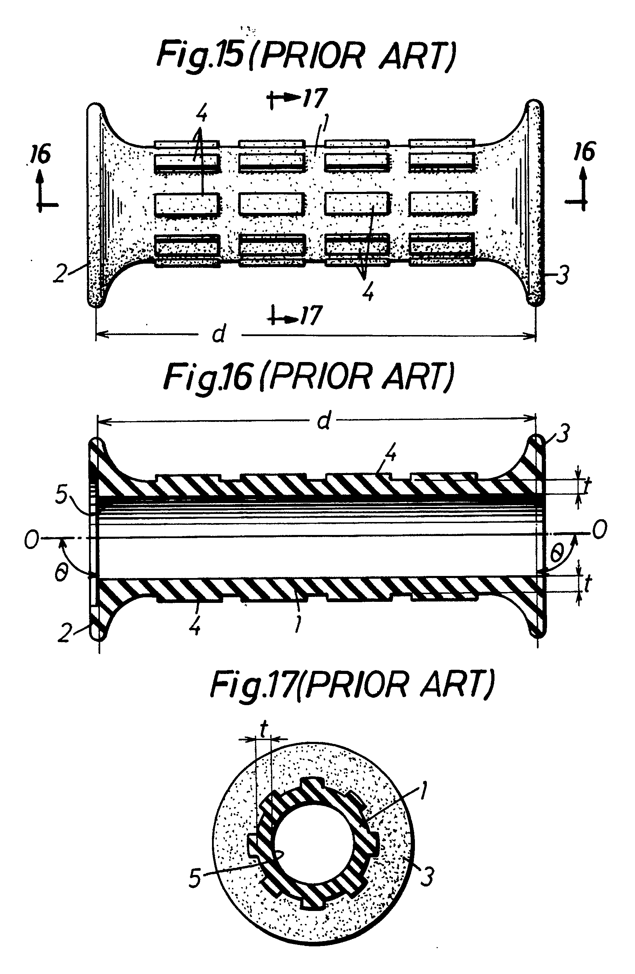

However, conventional handle grips attached to the steering handle bar of such gliding boat may be said to be almost the sale as those attached to the steering handle bar of a motorcycle, as a typical example is shown in Figs. 15 through 17, wherein a grip body 1 is made from an elastic resin, such as rubber or synthetic resin in a simple cylindrical form having a thickness and length such that it can be gripped by one hand, with a pair of operator's hand stopping flanges 2 and 3 integrally extending from the longitudinal opposite ends and with a number of slip-preventive ridges 4 distributed at predetermined intervals. There is also a known handle grip having recesses instead of ridges 4; in either case, they serve to roughen the surface.

Such handle grips may be acceptable so long as they are used for land-traveling motorcycles to develop stable steering performance when the vehicle is moving in a straight line or in a curve; however, it should be said that such handle grips have much to be improved if they are to be used for jet-propelled type gliding boats to steer the boat freely as the rider desires, changing the attitude and direction of travel of the boat.

That is, generally the grip body of a handle grip is gripped by the palm and five fingers of operator's one hand so as to be covered from above. And thicker handle grips can be griped more strongly and stably than thinner ones. Since the grip body 1 of said conventional article has a circular cross-section, it is difficult, as considered from human engineering, to fit the palm and five fingers of operator's hand naturally and closely around the circumferential surface of the grip body 1, thus decreasing the feeling of unity with the boat and the feeling of security.

Anatomically, man's five fingers each have a plurality of joints, and of two adjacent distances between adjacent joints (or the bending lengths of the phalanxes), the one spaced more from the root toward the tip of each finger is shorter. Therefore, when the grip body 1 is gripped by the bending action of the phalanxes, none of the five fingers bend in a circular arc. In the gripping state, the skin of the palm and five fingers only seemingly extends along the circumferential surface of the grip body 1. Therefore, the operator has to move his wrists and arms more than necessary when steering the boat.

That is, the grip body 1 of the conventional article can develop no other performance than stabilizing the operator's body in connection with the boat 1. This also applies to the case where the grip body 1 is made thicker, so long as its cross section forms a circle.

Furthermore, in the conventional grip body 1, the attaching port 5 for attachment to the handle bar extends exactly along the longitudinal axis O-O; thus, its wall thickness t is uniform throughout. The slip preventive ridges 4 described above are the same in height, having no other function than increasing the coefficient of friction with respect to the operator's hand. The fact that the wall thickness t is uniform throughout means that the degree of elastic deformation of the circumferential surface of the grip body 1 is also uniform throughout.

Therefore, the circumferential surface of the grip body 1 does not smoothly deform in response to local movements of the operator's hand gripping the grip body 1. for this reason and also because of the circular cross section, the operator's hand tends to be fatigued and, furthermore, control on the direction of travel of the boat is lost. That is, it becomes impossible to efficiently apply operating forces to the handle bar for pushing the boat forward or pulling it backward. The result is only that the gripping force is uniformly distributed over the entire circumferential surface.

In other words, the respective movements of the five fingers and palm of the operator's hand cannot directly, subtly and correctly reflect the movement of the grip body 1. In this sense, even if the grip body 1 is made from an elastic material, such as rubber of synthetic resin, it will not differ from a rigid grip body. That is, the grip body 1 of the conventional article is not a design with consideration given even to the movements of the five fingers and palm of the operator's hand.

Further, the pair of operator's hand stopping flanges 2 and 3 extending from the grip body 1 of the conventional article have a predetermined width and are in the form of annuluses extending at a right angle $\theta$ with respect to the longitudinal center line O-O of the grip body 1.

That is, the distance d between the flanges 2 and 3 is constant whether it is measured at the front or the rear. This means that the flanges are parallel only. Furthermore, as it is mentioned above that the wall thickness t on the circumferential surface of the grip body 1 is uniform throughout, the circumferential surface forms a surface which is parallel to the longitudinal center line O-O of the grip body 1.

However, since the handle bar is bent in the rearwardly diverging figure

"/ \",

it is comfortable, as considered from human engineering, for the operator to dispose his arms in conformity to the rearwardly diverging figure when gripping the grip body 1. It is also seen that when a man's hand is opened with its five fingers extending side by side in parallel relation to each other, it is seen that the width gradually increases from the region defined by the finger tips to the palm region. In this respect, the flanges 2 and 3 of the conventional article are not suited to the operator's hand and very difficult to use, causing a feeling of incongruity.

The grip body 1 of the conventional article is only provided with a plurality of ridges 4 distributed over the entire circumferential surface to serve as slip-preventive means for the operator's hand. That is, there is only one pattern of ridges 4 for roughening the circumferential surface, and there is no partitioning projection for separating the second through fifth fingers from the first finger of the operator's hand.

Thus, if the operator's body is swung out when driving the boat in a curve, the operator's hand gripping the handle grip tends to slip laterally outward longitudinally of the grip body 1, and it is difficult to turn the throttle operating lever in a stabilized manner by the second finger of the hand gripping the grip body.

SUMMARY OF THE INVENTION

The present invention has been accomplished to solve such problems. Accordingly, a first object of the invention is to provide an arrangement wherein the grip body to be gripped by the operator's hand is made from an elastic material and its cross section has an egg shape (special ellipse) with opposed front and rear arcuate surfaces positioned on the major axis and opposed to each other, the radius of curvature of the front arcuate surface being shorter than that of the rear arcuate surface, and wherein in consideration of attachment to a handle bar, the grip body is designed so that the second through fifth fingers, excluding the thumb, of the operator's hand contact the front arcuate surface while the palm of the operator's hand contacts the rear arcuate surface, whereby the surface area of the grip body is increased and, in an anatomical aspect, the entire surface is suited to changes in the bending lengths of man's phalanxes to ensure that the operator's hand intimately fits the surface of the grip body when the latter is gripped in a natural manner.

While the front arcuate surface of the grip body is presented for contact by the second through fifth fingers of the operator's hand and the rear arcuate surface for contact by the palm of the operator's hand, if the grip body is attached to the handle bar such that the major axis of the grip body of egg-shaped cross section is directed to coincide with the horizontal pivot axis of the tiltable handle pole of the boat, then a force for forwardly pushing or rearwardly pulling the boat can be applied to the handle bar in the correct direction.

A second object of the invention is to provide an arrangement wherein the attaching port in the grip body for attachment to the handle bar is positioned on the major axis of the grip body of egg-shaped cross section and opens to an eccentric position deviated toward the rear arcuate surface, wherein the thickness of the front region defined between the front arcuate surface and the inner wall surface of the attaching port of the grip body is locally greater than that of the remaining regions, said specially thickened front region being formed with a plurality of dot-like through-holes substantially orthogonal to the major axis, whereby whereas the grip body itself is made from a material of limited elasticity, the elastic deformability of the front arcuate surface to be contacted by the second through fifth fingers of the operator's hand is locally increased to a great extent, thus making it possible to apply even subtle movements of the fingers of the operator's hand directly and naturally to the grip body.

A third object of the invention is to provide an arrangement wherein the rear arcuate surface of the grip body is formed with a plurality of furrows serving as slip-preventive means for the operator's hand so that they are parallel with each other in orthogonal relation to the longitudinal center line of the attaching port of the grip body, and wherein the thickness of the rear region defined between the rear arcuate surface and the inner wall surface of said attaching port is changed so that it is gradually increased as the longitudinal middle of the grip body is approached so as to form the rear arcuate surface of the grip body into a convex surface bulging backward, thereby ensuring that the palm of the operator's hand rationally and intimately fits the rear arcuate surface of the grip body to hold the grip body without danger of slippage.

A fourth object of the invention is to provide an arrangement wherein a pair of operator's hand stopping flanges of large diameter bulging integrally from the longitudinally opposite ends of the grip body, said flanges having an egg shape similar to the cross-sectional shape of the grip body, the bulging planes of said flanges crossing the longitudinal center line of the attaching port of the grip body at angles other than right angle so that the flanges look like the rearwardly diverging figure

"/ \"

as seen in plan view, thereby making it possible for the operator's hands to grip the grip bodies attached to the handle bar in a comfortable posture as considered from human engineering.

A fifth object of the invention is to provide an arrangement wherein a partitioning projection for separating the second finger from the three of the third through fifth fingers bulges integrally from the middle of the front arcuate surface of the grip body, thereby reliably preventing lateral slippage of the operator's hand and enabling the operator, gripping the grip body in a stable manner by the three of the third through fifth fingers and the thumb, to stretch his second finger forwardly to smoothly manipulate the throttle operating lever attached to the handle bar.

Other objects of the invention together with the construction thereof will appear from the detailed description of preferred embodiments of the invention.

BRIEF DESCRIPTION OF THE DRAWINGS

Fig. 1 is an overall diagrammatic side view, partly broken away, of a jet-propelled gliding boat;

Fig. 2 is an enlarged plan view showing how handle grips are attached to the steering handle bar of the gliding boat;

Fig. 3 is a full-scale plan view of one such handle grip;

Fig. 4 is a rear view;

Fig. 5 is a front view;

Figs. 6 and 7 are right side view and left side view, respectively;

Figs. 8 and 9 are sectional views taken along the lines 8-8 and 9-9 in Fig. 3, respectively;

Fig. 10 is a sectional view taken along the line 10-10 in Fig. 4;

Fig. 11 is a plan view, in section, corresponding to Fig. 10, showing the handle grip attached to the handle bar;

Fig. 12 is a side view, in section, corresponding to Fig. 9, showing how the handle grip is gripped;

Fig. 13 is a plan view showing how the throttle operating lever is manipulated by the hand gripping the handle grip;

Fig. 14 is a plan view of a modification of the handle grip corresponding to Fig. 3, not having a partitioning projection for fingers;

Fig. 15 is a plan view of a conventional handle grip; and

Figs. 16 and 17 are sectional views taken along the lines 16-16 and 17-17 in Fig. 15.

DETAILED DESCRIPTION OF THE PREFERRED EMBODIMENTS

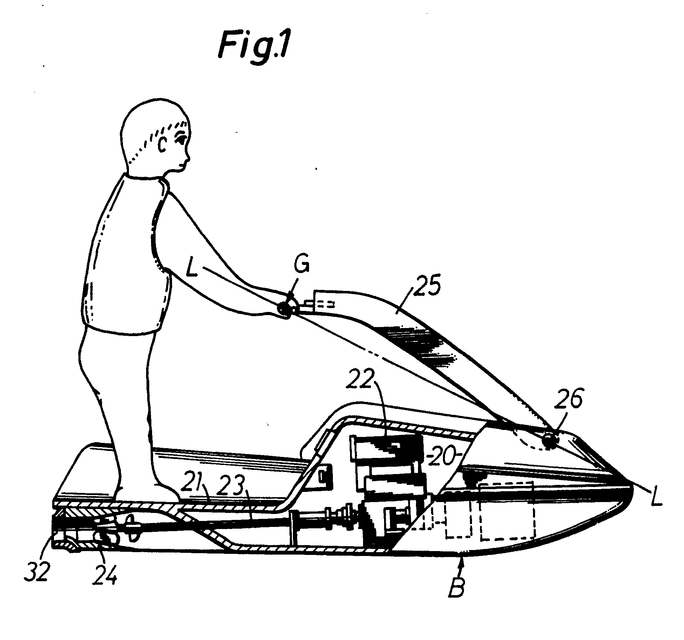

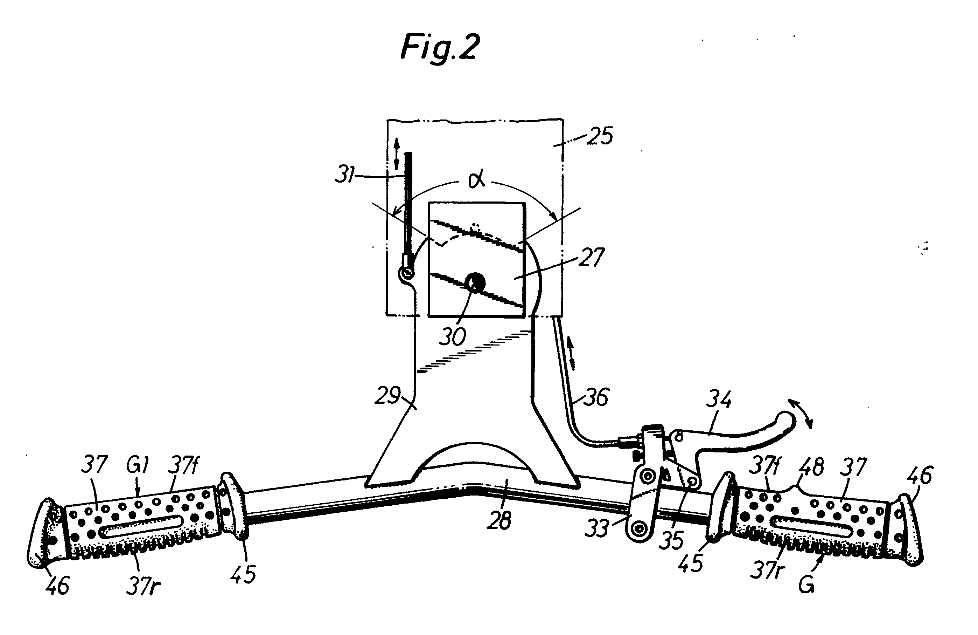

The construction of the invention will now be described with reference to the accompanying drawings. Figs. 1 and 2 show the steering handle bar of a jet-propelled gliding boat. The character B generally indicates the boat made of fiber-reinforced plastic (FRP), said boat being of hollow sealed construction. An engine room 20 is defined in the front half of the boat, while the rear half is in the form of a floor deck 21. An operator rides the boat in a standing posture on said floor deck.

The numeral 22 denotes an engine housed in the engine room 20, said engine driving a jet-propelling device (water jet pump) 24 through a propeller shaft 23 to apply a propelling force to the boat B . The numeral 25 denotes a tiltable handle pole pivotally connected to the bow of the boat B by a horizontal shaft 26 so that its rear upper end is swingable, said rear upper end overhanging the floor deck 21 and having a steering handle attaching base plate 27 integrally fixed thereto in a patch fashion.

The numeral 28 denotes a steering handle bar made of a round metal pipe, said handle bar being somewhat bent in rearwardly diverging inverted V shape, as is clear from the plan view of Fig. 2, with an attaching plate 29 forwardly extending integrally from the middle thereof. And the attaching handle plate 29 on the handle bar 28 is joined from below to the base plate 27 on the handle pole 25 and is pivotally mounted on a vertical shaft 30; thus, the boat B can be steered by swinging the handle bar 28 within a predetermined angular range α around the axis of the vertical shaft 30.

The vertical shaft 30 is located on the center line of travel of the boat B , as shown in Fig. 2, and one end of a steering cable 31 is fixed to the ear portion of the attaching plate 29 laterally deviated toward the left or right. Though not shown, the other end of the steering cable 31 extends rearward through the interior of the boat and is connected to a steering nozzle 32 attached to the jet-propelling device 24 in the stern. Thus, when the operator holds the handle bar 28 by both hands and manipulates it for steering, the steering nozzle 32 is likewise swung to steer the boat B .

The numeral 33 denotes a lever attaching bracket fixed in the region of the handle bar 28 deviated from the middle toward the left or right; 34 denotes a throttle operating lever turnably connected to the bracket 33 through a pivot pin 35; and 36 denotes a throttle cable which connects the operating lever 34 to a throttle valve (not shown) for the carburetor on the engine 22 so that when the operator manipulates the throttle operating lever 34 by a finger of his one hand, the throttle cable 36 is advanced or retracted to open or close the throttle valve to change the gliding speed of the boat B .

The character G generally indicates a steering handle grip to which the invention is directed. It is made from a suitably elastically deformable material, such as polyvinyl chloride, silicone resin or other synthetic resin, or rubber; in use, a pair of such handle grips are attached symmetrically to the opposite ends of the handle bar 28.

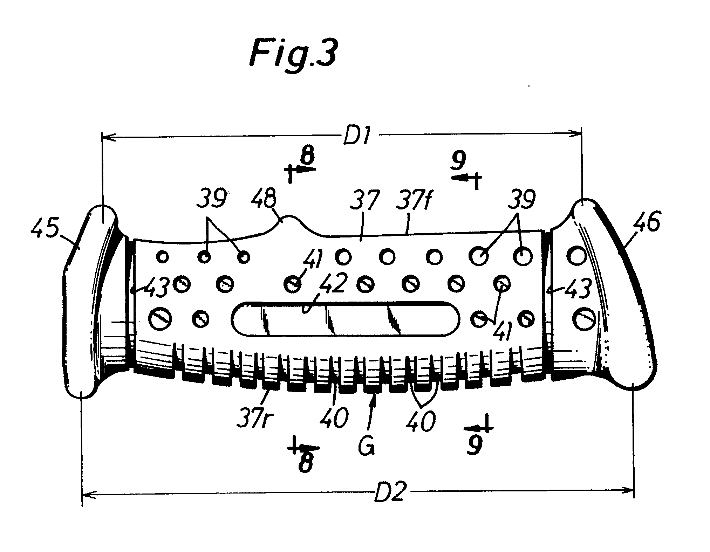

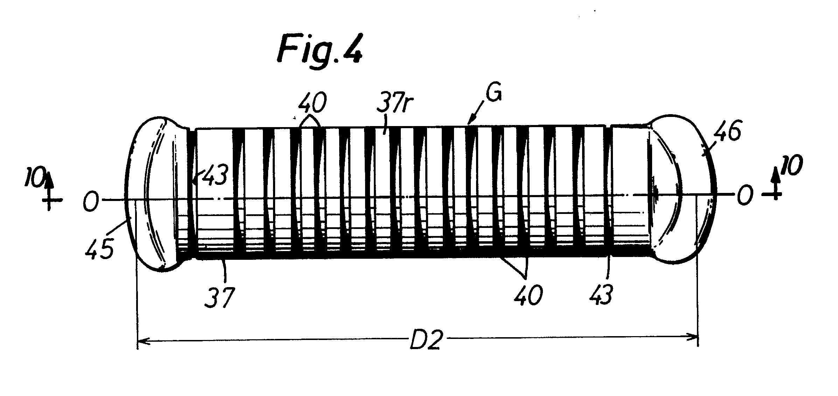

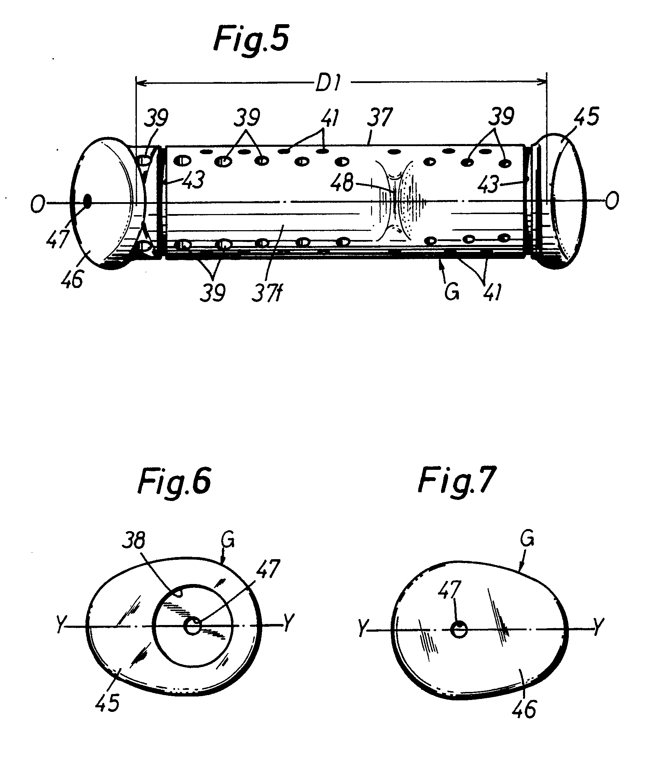

The pair of handle grips G are of the same configuration, and one of them is singled out and shown enlarged in Figs. 3 through 13 and will now be described in detail. The numeral 37 denotes a grip body having a given thickness and length such that it can be gripped by one hand, the cross section thereof having an egg shape (special ellipse).

Concerning the cross-sectional shape of the grip body 37, the radii of curvature of the opposed front and rear arcuate surfaces 37f and 37r positioned on the major axis Y-Y are not equal to each other but the front arcuate surface 37f has a shorter radius of curvature than that of the rear arcuate surface 37r, while the radii of curvature of the remaining upper and lower arcuate surfaces 37u and 37d are equal to each other but greater than that of the rear arcuate surface 37r; thus, the front and rear arcuate surfaces 37f and 37r are smoothly connected together by the upper and lower arcuate surfaces 37u and 37d.

Herein, the terms "front," "rear," "upper" and "lower" are used to define the direction in which the grip body 37 is attached to the handle bar 28. The grip body 37 is attached to the handle bar 28 in such a relation that the front arcuate surface 37f is located in the direction of advance of the boat B and the upper arcuate surface 37u is directed to the upper side of the boat B .

In other words, the grip body 37 is attached to the handle bar 28 in such a manner that when the grip body 37 is seen laterally of the boat B , the front arcuate surface 37f is directed forward with the longitudinal axis Y-Y being substantially horizontal.

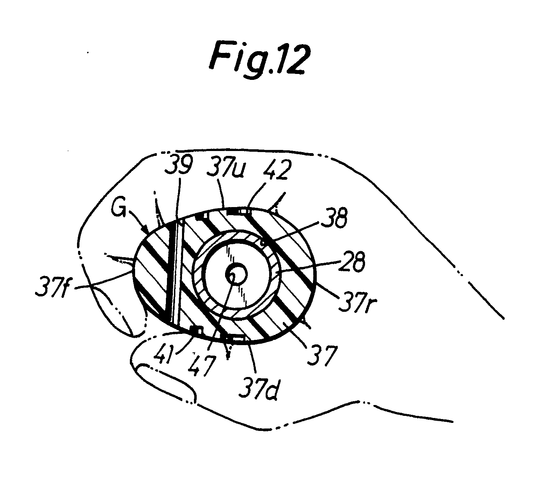

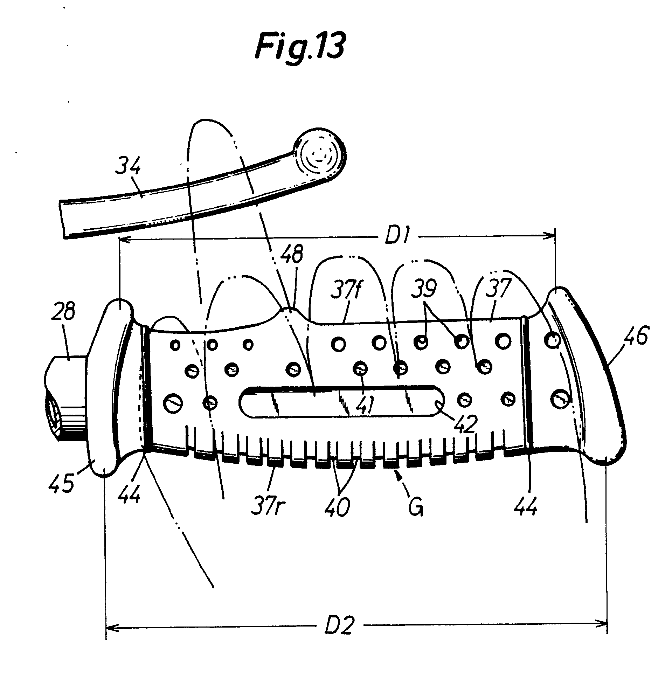

When this is considered from the positional relation to the operator's hand gripping the grip body, as suggested in Figs. 12 and 13, the second through fifth fingers, excluding the first finger (thumb), of the operator's hand encircle and contact the front arcuate surface 37f of the grip body 37 while the top finger pads of the second through fifth fingers and the first finger are applied to the lower arcuate surface 37d. On the other hand, the palm or particularly the thenar and hypothenar encircle and contact the rear arcuate surface 37r of the grip body 37 while the interdigital pads contact the upper arcuate surface 37u of the grip body 37.

However, as long as the handle grip 37 is used by being gripped in such positional relation, it may be attached to the handle bar 28 so that the major axis Y-Y of the egg-shaped grip body 37 somewhat slopes forwardly downward when seen from the side.

The installed level of the handle bar 28 attached to the upper rear end of the handle pole 25, which is tiltable as described above, changes and so does the height of the operator, from person to person, who rides on the boat B in a standing posture on the floor deck 21; thus, the grip body 37 may be attached to the handle bar 28 so that the major axis Y-Y is oriented in the direction in which it is most convenient for the operator to grip the grip body 37.

In that case, if the grip body 37 is attached to the handle bar 28 so that the major axis Y-Y of the grip body 37 is directed to the axis of the horizontal shaft 26 for pivotally supporting the tiltable handle pole 25, as suggested by a phantom line L-L in Fig. 1, then the operating force for forwardly pushing or rearwardly pulling the handle bar 28 can be rationally applied to the boat B without loss and the boat can be accurately oriented during steering.

The grip body 37, which has a given length and thickness as mentioned above, has an attaching port 38 extending longitudinally thereof for attachment to the handle bar 28. The attaching port 38 is circular in cross section and has a smaller diameter than that of the handle bar. The attaching port is located on the major axis Y-Y in an eccentric position deviated by a given distance toward the rear arcuate surface 37r.

As a result, the thickness T1 of the front region defined between the inner wall surface of the attaching port 38 and the front arcuate surface 37f is greater than any of the respective thicknesses T2, T3 and T4 of the rear, upper and lower regions defined between the inner wall surface of the attaching port 38 and the rear, upper and lower arcuate surfaces 37r, 37u and 37d, respectively.

Although the thicknesses T2, T3 and T4 of the rear, upper and lower regions are shown equal in the figures, these thicknesses may be unequal provided that the thickness T1 of the front region is increased so that it is thicker than any of them.

The numeral 39 denotes a plurality of through-holes formed in said upper region in orthogonal relation to the major axis Y-Y of the grip body 37, said through-holes being spaced apart at regular intervals throughout the length of the grip body 37. Therefore, even though the whole of the grip body 37 is made of the same elastic material, the presence of the through-holes 39 distributed throughout the front region makes the elastic deformability of the front region greater than that of the other regions. The front region forms the continuous base for the front arcuate surface 37f, and the operator's fingers contact said front arcuate surface 37f, as described above; thus, the subtle movements of the fingers can be transmitted directly and effectively to the grip body 37.

More particularly, if the operator grips the front arcuate surface 37f of the grip body 37 firmly by the second through fifth fingers of his one hand, the front region will smoothly undergo elastic deformation to collapse said through-holes 39. Thus, the movements of the fingers are precisely reflected. In that case, the gripping forces exerted by the second through fifth fingers are not equal; anatomically, the gripping force exerted by the fifth finger is the lowest. Therefore, it is desirable that the diameter of the through-holes 39 be gradually increased as one end of the grip body 37 to be contacted by the fifth finger is approached so as to further increase the elastic deformability thereof.

The numeral 40 denotes a plurality of furrows formed on the rear arcuate surface 37r of the grip body 37 for preventing slippage of the operator's hand, said furrows extending parallel to each other in orthogonal relation to the longitudinal center line O-O of the attaching port 38 of the grip body 37. The furrows 40 have a given depth measured from the rear arcuate surface 37r.

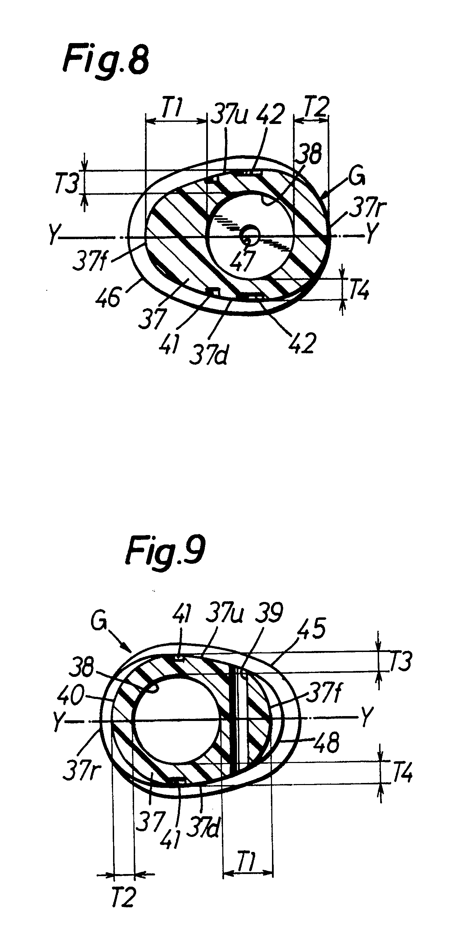

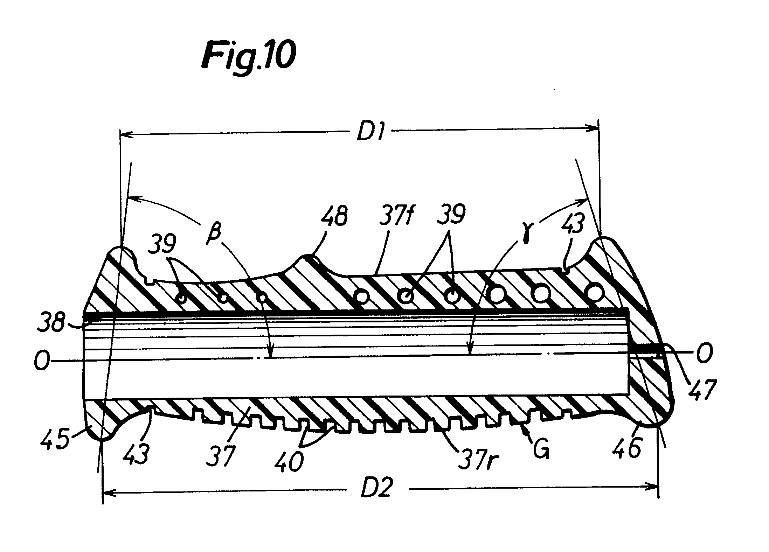

As is clear from Figs. 8 and 10, it is preferable that the thickness T2 of the rear region defined between the rear arcuate surface 37r of the grip body 37 and the inner wall surface of the attaching port 38 be gradually increased as the longitudinal middle of the grip body 37 is approached so that the rear arcuate surface 37r is in the form of a convex surface bulging rearwardly of the middle.

As a result, the palm of the operator's hand contacts the rear arcuate surface 37r as described above. Anatomically, the intermediate region between the thenar and the hypothenar of the palm consists of the recessed skin; therefore, the rear arcuate surface 27r of the grip body 37 in the form of a convex surface more intimately fits said intermediate region, a fact which means that prevention of slippage of the operator's hand and elimination of a feeling of incongruity can be attained more effectively.

The numeral 41 denote a plurality of recesses formed in the upper and lower arcuate surfaces 37u and 37d for preventing slippage of the operator's hand, said recesses having a given depth not reaching the attaching port 38, said recesses being distributed throughout. The numeral 42 denotes recessed surfaces of given depth disposed substantially in the middle portions of the upper and lower arcuate surfaces 37u and 37d and extending a given distance longitudinally of the grip body 37. A trade mark indicating the origin of the product will be impressed in such recessed surface or a seal bearing such trade mark will be bonded thereto.

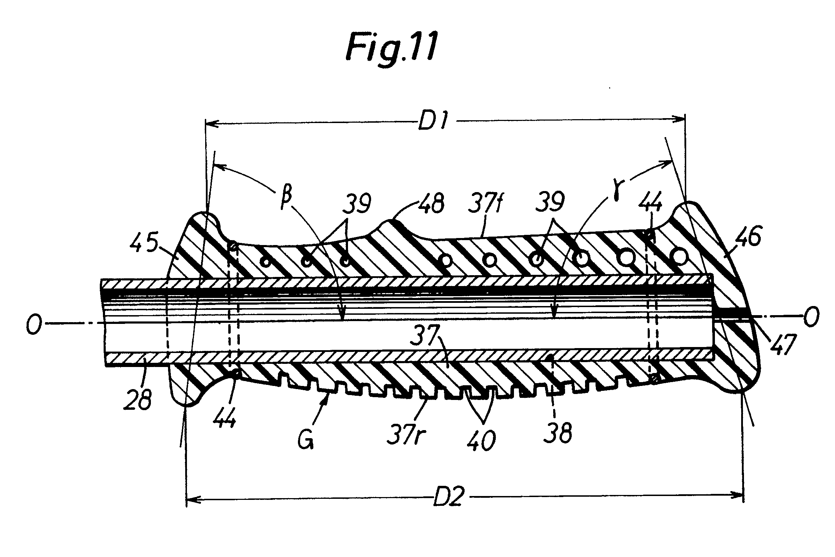

The numeral 43 denotes a pair of peripheral grooves formed in the longitudinal opposite ends of the grip body 37 and continuously circumferentially extending in orthogonal relation to the longitudinal center line O-O of the attaching port 38. Wire or band clamps 44 are fitted in said grooves to strengthen the attachment of the grip body 37 to the handle bar 28, as shown in Fig. 11.

In order to attach the grip body 37 to the handle bar 28, the attaching port 38 is forced to slide onto the handle bar 28 from its cut end, with an adhesive agent injected into the attaching port 38 in advance to fix the grip body in position. The clamps 44 will be wound around the grip body 37 to increase the fixing strength, as the need arises.

The numerals 45 and 46 denote a pair of operator's hand stopping flanges continuously bulging from the longitudinal opposite ends of the grip body 37. In the figures, they are shown having an egg shape (special ellipse), as seen in side view, similar to the cross sectional shape of the grip body 37. Although they are shown extending with a uniform height throughout from the surface of the grip body 37, they may be circular as seen in side view so long as they are effective to prevent lateral slippage of the operator's hand.

As is clear from Figs. 2, 3, 10 and 13, it is preferable that the pair of flanges 45 and 46 be disposed in the rearwardly diverging figure

$$\text{''}_{/} \text{\textbackslash''}$$

as seen in plan view. That is, the bulging planes of the flanges 45 and 46 cross the longitudinal center line O-O of the attaching port 38 at angles $\beta$ and $\gamma$ other than right angle so that the distance D1 measured between their front edges is shorter than the distance D2 measured between their rear edges.

Anatomically, when a man's hand is opened with its fingers extending side by side in parallel relation to each other, the root region and the palm are each wider than the front region defined by the four finger tips. And if the operator grips the handle bar 28 by both hands disposed in connection with the rearwardly diverging figure

$$\text{''}_{/} \text{\textbackslash''} ,$$

this disposition provides a more comfortable handle bar gripping posture. Thus, the bulging planes of the flanges 45 and 46 arranged in the manner described above effectively match with such disposition of the operator's hands, rationally eliminating the occurrence of a feeling of incongruity.

In addition, the numeral 47 denotes a small vent hole formed in one stop flange 46 and communicating with the attaching port 38.

As shown in Figs. 3, 5, 10 and 13, a finger partitioning projection 48 continuously extends forward from an intermediate region of said front arcuate surface 37f of the grip body 37 for separating the second finger from the three of the third through fifth fingers of the hand gripping the grip body 37. Thus, the lateral slippage of the operator's hand can be prevented more reliably. This enables the operator to stably stretch the second finger of his hand gripping the grip body 37 forwardly as shown in chain lines in Fig. 13 so as to turn the throttle operating lever 34. In this case, this operation can be stably and smoothly performed with the third through fifth fingers and the thumb firmly gripping the grip body 37.

In this sense, in Fig. 2, a handle grip G having such finger partitioning projection 48 and a handle grip G1 devoid only of such projection 48 are prepared and the former is attached to the region of the handle bar 28 associated with the throttle operating lever 34. However, a pair of handle grips G each having such projection 48 may be attached to the opposite ends of the handle bar 28. Alternatively, a pair of handle grips G1 devoid only of such projection 48 may be attached to the opposite ends of the handle bar 28.

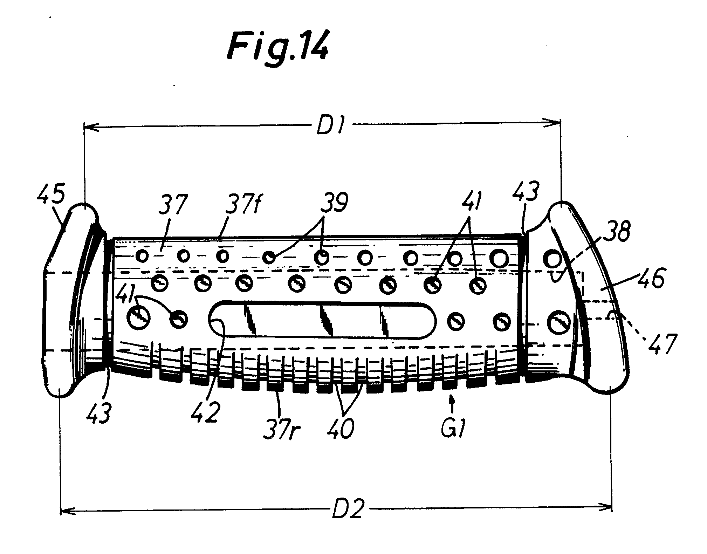

In addition, in a modification in Fig. 14 showing the handle grip G1 devoid only of a projection 48, the components corresponding to those in the handle grip G are denoted by the same reference characters. The handle grip G1 is the same in arrangement excluding the projection 48 as the basic example shown in Figs. 3 through 13.

At any rate, since the handle grip G is made from an elastic material, it can be colored in the case where it is made from a synthetic resin. It is advantageous from the standpoint of safety to use a fluorescent color for such coloration since, in the event that the boat B should cause an accident making it no longer possible to drive the boat, the fluorescence makes it easier for a third person to find the boat B in a rescue operation.

As can be understood from the above description, according to the arrangement of the present invention, there is provided a handle grip G to be attached to the steering handle bar 28 of a jet-propelled gliding boat, including a grip body 37 made from an elastically deformable material such as synthetic resin or rubber and having a thickness and length such that it can be held by one hand, and a pair of operator's hand stopping flanges 45 and 46 of large diameter bulging continuously and integrally from the longitudinal opposite ends of said grip body, said handle grip being characterized in that the grip body 37 is egg-shaped in cross-section, having opposed front and rear arcuate surfaces 37f and 37r positioned on the major axis Y-Y, said front arcuate surface 37f being contacted by the second through fifth fingers of the operator's hand, said rear arcuate surface 37r being contacted by the palm. Further, since the radius of curvature of the front arcuate surface 37f is shorter than that of the rear arcuate surface 37r, the surface area of the grip body 37 is greater than that of a conventional article if the latter is supposed to have the same thickness as that of the grip body 37. Anatomically, it is possible to match the surface area of the grip body 37 with the bending lengths of the phalanxes.

That is, as described at the outset, man's five fingers each have a plurality of joints, and of two adjacent distances between adjacent joints, the one spaced more from the root toward the tip of each finger is shorter. Since the front arcuate surface 37f of the grip body 37 serving as a surface for contact with the second through fifth fingers is in the form of a circular arc having a shorter radius of curvature than that of the rear arcuate surface 37r, the second through fifth fingers of the operator's hand naturally and intimately fit the grip body 37; thus, the grip body can be extremely stably and firmly gripped.

Further, the cross-section of the grip body 37 is egg-shaped, and if the grip body 37 is attached to the handle bar 28 so that the major axis Y-Y is set in a forwardly downwardly sloping position directed to the horizontal shaft 26 pivotally supporting the tiltable handle pole 25, then an operating force for forwardly pushing or rearwardly pulling the handle bar 28 can be efficiently and accurately applied in the correct direction along the major axis Y-Y of the grip body. This arrangement is very effective in steering the boat B when the boat is floating with its bow raised above the water surface or when it is descending with its bow inclined downward.

In this connection, with a handle grip of circular cross-section as found in a conventional article, although the gripping force can be distributed, the handle grip is not effective in intentionally changing the attitude of the boat B .

In the grip body 37 of the present invention, the attaching port 38 for attachment to the handle bar 28 opens at an eccentric position deviated toward the rear arcuate surface 37r along the major axis Y-Y of the egg-shaped cross-section. As a result, the thickness T1 of the front region defined between the front arcuate surface 37f and the inner wall surface of the attaching port 38 is locally made greater than the thicknesses T2, T3 and T4 of the remaining regions.

And the thickened front region is formed with a plurality of dot-like through-holes 39 substantially orthogonal to the major axis Y-Y of the grip body 37, thereby increasing the elastic deformability of the front arcuate surface 37f of the grip body 37. This surface is contacted by the second through fifth fingers of the operator's hand, and even subtle movements of the operator's hand can be directly and rationally transmitted to the grip body 37. As a result, any desired attitude of the boat can be attained without requiring the wrists and arms to exert excessive forces as in the conventional article. This improves the operator's feeling of unity with the boat and the response characteristic for steering.

The rear arcuate surface 37r of the grip body 37 is adapted to be contacted by the palm of the operator's hand and is formed with a plurality of operator's hand slippage preventing furrows 40 extending parallel to each other in orthogonal relation to the longitudinal center line O-O of the attaching port 38 of the grip body 37; thus, the coefficient of friction with respect to the operator's hand is increased.

If the upper and lower arcuate surfaces 37u and 37d of the grip body 37 are also formed with operator's hand slippage preventing recesses 41 which are dot-like, the operator's hand slippage preventing effect can be further enhanced since the pattern of the recesses 41 differs from the pattern of the furrows 40 in the rear arcuate surface 37r in that the recesses 41 are dot-like whereas the furrows 40 are disposed in parallel lines.

Particularly, if the thickness T2 of the rear region defined between the rear arcuate surface 37r and the inner wall surface of the attaching port 38 of the grip body 37 is gradually increased as the longitudinal middle of the grip body 37 is approached so that the rear arcuate surface 37r of the grip body 37 is in the form of a convex surface bulging rearward, then the palm of the operator's hand intimately fits the rear arcuate surface, with the result that the forwardly pushing force exerted by the palm can be effectively applied to the handle bar 28. Anatomically, a man's palm bends so that the region between the thenar and the hypothenar sinks. Thus, it follows that the rear arcuate surface 37r of the grip body 37, which is in the form of a convex surface, intimately fits the sunken region of the palm.

Further, the pair of operator's hand stopping flanges bulging from the opposite ends of the grip body 37 are made in an egg shape similar to the cross sectional shape of the grip body 37 and the bulging planes of the flanges are disposed to cross the longitudinal center line O-O of the attaching port 38 of the grip body at angles other than right angle so that the distance D1 measured between their front edges is shorter than the distance D2 measured between their rear edges, thereby arranging the flanges 45 and 46 in the rearwardly diverging figure

"/ \"

as seen in plan view. As a result, when the operator grips the handle bar 28 at its opposite ends, the operator's hand can be disposed in a rational position as considered from human engineering, contributing much to prevention of operator's fatigue during steering.

Further, if the grip body 37 is provided with a partitioning projection 48 continuously extending forward from an intermediate region of the front arcuate surface 37f for separating the second finger from the three of the third through fifth fingers of the operator's hand contacting said surface, this enables the operator's hand to be firmly maintained even if the operator's body is shaken, effectively preventing lateral slippage of the operator's hand. Another advantage of said partitioning projection is that it also enables the operator to stretch the second finger of his hand gripping the grip body to smoothly turn the throttle operating lever 34 while stably gripping the grip body 37 by the three of the third through fifth fingers and thumb. Thus, this handle grip is very useful for use as a handle grip to be attached to the steering handle bar 28 of a jet-propelled gliding boat.

In addition, there is a jet-propelled gliding boat of the so-called scooter type comprising seats for several persons to sit on, a handle pole fixed on the boat, and a tiltable handle bar pivotally mounted on the rear top end of said handle pole, wherein the operator sitting on the seat instead of standing on the floor deck grips the handle bar. It goes without saying that the handle grip of the present invention is also applicable to the handle bar of such scooter type boat within the scope of the present invention.

## Claims

1. A steering handle grip ( $\overline{G}$ ) to be attached to the steering handle bar (28) of a jet-propelled gliding boat, including a grip body (37) made from an elastically deformable material such as synthetic resin or rubber and having a thickness and length such that it can be held by one hand, and a pair of operator's hand stopping flanges (45, 46) of large diameter bulging continuously and integrally from the longitudinal opposite ends of said grip body, said handle grip being characterized in that: the grip body (37) is egg-shaped in cross-section, having opposed front and rear arcuate surfaces (37f, 37r) positioned on the major axis (Y-Y), said front arcuate surface (37f) being contacted by the second through fifth fingers of the operator's hand, said rear arcuate surface (37r) being contacted by the palm,

an attaching port (38) for attachment to the handle bar (28), said attaching port opening at an eccentric position deviated toward the rear arcuate surface (47r) along the major axis (Y-Y) of said grip body (37),

wherein the thickness (T1) of the front region defined between the inner wall surface of the attaching port (38) and the front arcuate surface (37f) is greater than the respective thicknesses (T2, T3, T4) of the remaining regions, and

wherein the thickened front region is formed with a plurality of dot-like through-holes (39) substantially orthogonal to said major axis (Y-Y) of the grip body (37).

2. A steering handle grip for jet-propelled gliding boats as set forth in Claim 1, characterized in that: the rear arcuate surface (37r) of the grip body (37) is formed with a plurality of operator's hand slippage preventing furrows (40) extending parallel to each other in orthogonal relation to the longitudinal center line (O-O) of the attaching port (38) of the grip body (37), and

the thickness (T2) of the rear region defined between the rear arcuate surface (37r) and the inner wall surface of the attaching port (38) of the grip body (37) is gradually increased as the longitudinal middle of the grip body (37) is approached so that the rear arcuate surface (37r) of the grip body (37) is in the form of a convex surface bulging rearward.

3. A steering handle grip for jet-propelled gliding boats as set forth in Claim 1, characterized in that: a pair of operator's hand stopping flanges (45, 46) bulging from the opposite ends of the grip body (37) have an egg shape similar to the cross sectional shape of the grip body (37),

the bulging planes of said stop flanges (45, 46) cross the longitudinal center line (O-O) of the attaching port (38) of the grip body (37) at angles (β, γ) other than right angle so that the distance (D1) measured between their front edges is shorter than the distance (D2) measured between their rear edges, thereby arranging the stop flanges (45, 46) in the rearwardly diverging figure

$$\text{"/ \textbackslash"}$$

as seen in plan view.

4. A steering handle grip for jet-propelled gliding boats as set forth in Claim 1, characterized in that: the grip body (37) is provided with a partitioning projection (48) continuously extending forward from an intermediate region of the front arcuate surface (37f) for separating the second finger from the three of the third through fifth fingers of the operator's hand contacting said surface.

# Fig.1

Fig.2

Fig.3

Fig.4

EP 0 414 989 A1

# Fig.5

# Fig.6

# Fig.7

# Fig.8

# Fig.9

Fig.10

EP 0 414 989 A1

# Fig.11

EP 0 414 989 A1

# Fig.12

# Fig.13

# Fig.14

# Fig.15 (PRIOR ART)

# Fig.16 (PRIOR ART)

# Fig.17 (PRIOR ART)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-2567291 (BERTRAND) <br> * page 4, line 30 - page 9, line 1; figures 1-3 * | 1, 3 | B63B35/79 <br> B63B35/81 |
| A | | 2, 4 | |
| Y | US-A-4182258 (PRESSER) <br> * the whole document * | 1, 3 | |
| A | | 2, 4 | |
| A | US-A-2998797 (RISNEY) <br> * the whole document * | 1-3 | |
| A | US-A-4191065 (GALOBAY ET AL) <br> * the whole document * | 2-4 | |
| A | US-A-3148655 (BRANT) <br> * the whole document * | 1-4 | |
| A | DE-U-8519704.1 (SANDER SPEZIALWERKZEUG GMBH) <br> * the whole document * | 2 | |

TECHNICAL FIELDS
SEARCHED (Int. Cl.5 )

B63B
B62K

The present search report has been drawn up for all claims

| Place of search | Date of completion of the search | Examiner |
|---|---|---|
| THE HAGUE | 06 DECEMBER 1990 | DESENA Y HERNANDOREN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)